# DEMANDE DE BREVET EUROPEEN

(11) **EP 1 055 760 A1**
(43) Date de publication de la demande: **29.11.2000**
(21) Numéro de dépôt: 00401453.6
(22) Date de dépôt: 25.05.2000
(51) Int. Cl.: D04H 18/00, D04H 11/08, B60N 3/04

(54) **Procédé de fabrication d'une moquette aiguilletée**

(30) Priorité: 26.05.1999 FR 9906618
(71) Demandeur: Centre d'Etudes et Recherche pour l'Automobile ( CERA) S.A., 51100 Reims (FR)
(72) Inventeur: Vandelet, Eric, 60610 La Croix Saint Ouen (FR)
(74) Mandataire: Geismar, Thierry

(57) **Abrégé**

L'invention concerne un procédé de fabrication d'une moquette aiguilletée, comportant les étapes consistant à
former une nappe de fibres et déplacer cette nappe sensiblement parallèlement à son plan par rapport à un ensemble d'aiguilles à crans, et
animer lesdites aiguilles d'un mouvement alternatif sensiblement perpendiculairement au plan de la nappe de manière que les crans des aiguilles entremêlent les fibres de la nappe, les extrémités d'au moins certaines fibres venant en saillie sensiblement perpendiculairement audit plan,

La vitesse d'avance de la nappe et la fréquence du mouvement alternatif des aiguilles sont choisis en combinaison de manière que lesdites extrémités des fibres sont successivement plus ou moins en saillie suivant des bandes (9, 10) sensiblement parallèles entre elles dans le plan de la nappe.

## Description

La présente invention concerne un procédé de fabrication d'une moquette aiguilletée, et plus particulièrement un tel procédé comportant les étapes consistant à
former une nappe de fibres et déplacer cette nappe sensiblement parallèlement à son plan par rapport à un ensemble d'aiguilles à crans, et
animer lesdites aiguilles d'un mouvement alternatif sensiblement perpendiculairement au plan de la nappe de manière que les crans des aiguilles entremêlent les fibres de la nappe, les extrémités d'au moins certaines fibres venant en saillie sensiblement perpendiculairement audit plan.

De tels procédés sont bien connus sous le nom d'aiguilletage.

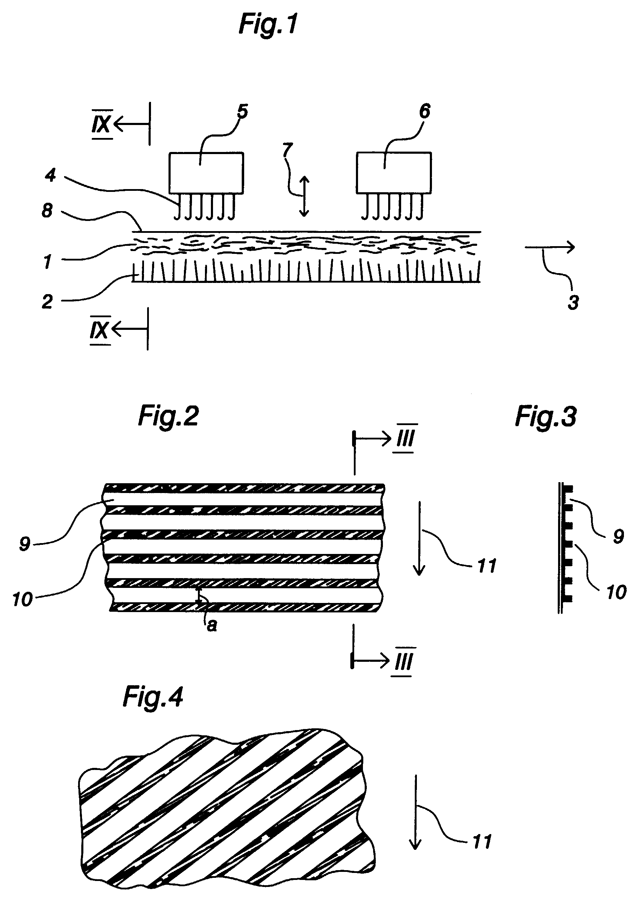

La figure 1 illustre très schématiquement une machine à aiguilleter, ou aiguilleteuse, de type connu.

Une nappe de fibres 1 préalablement formée est amenée audessus d'une brosse 2 et avancée suivant la direction de la flèche 3 sous des aiguilles à crans 4. Les extrémités des aiguilles 4 peuvent par exemple former des barbes comme représenté au dessin, ou des fourches.

Les aiguilles 4 sont ici montées sur deux planches à aiguilles 5 et 6 parallèles à la nappe de fibres 1. Elles sont disposées de façon aléatoire dans le plan des planches, mais de façon identique sur les deux planches. Les planches 5 et 6 sont agencées pour être animées par tout moyen convenable d'un mouvement alternatif vertical dans la direction de la flèche 7, perpendiculairement à la nappe de fibres 1.

Un débourreur 8 constitué par une plaque perforée est disposé entre la nappe de fibres 1 et les aiguilles 4 pour permettre le passage de ces aiguilles tout en empêchant la remontée des fibres lors de la remontée des aiguilles.

L'avance de la nappe 1 dans la direction de la flèche 3 se fait en continu. La vitesse d'avance de la nappe ainsi que la fréquence du mouvement alternatif des aiguilles 4 sont réglables indépendamment.

Au cours de ce mouvement alternatif, les extrémités des aiguilles 4 qui traversent la nappe dans les deux sens, entraînent les fibres qui se trouvent ainsi entremêlées. On obtient de cette manière une moquette formée d'une nappe consolidée, avec les extrémités de certaines fibres dressées perpendiculairement au plan de la nappe, donnant à celle-ci un aspect de velours sensiblement uni.

La présente invention vise à fournir un procédé permettant de fabriquer une telle moquette aiguilletée qui ne soit pas unie, mais d'aspect texturé en bandes parallèles.

A cet effet, l'invention a pour objet un procédé comportant les étapes consistant à
former une nappe de fibres et déplacer cette nappe sensiblement parallèlement à son plan par rapport à un ensemble d'aiguilles à crans, et
animer lesdites aiguilles d'un mouvement alternatif sensiblement perpendiculairement au plan de la nappe de manière que les crans des aiguilles entremêlent les fibres de la nappe, les extrémités d'au moins certaines fibres venant en saillie sensiblement perpendiculairement audit plan,
   caractérisé par le fait que la vitesse d'avance de la nappe et la fréquence du mouvement alternatif des aiguilles sont choisis en combinaison de manière que lesdites extrémités des fibres sont successivement plus ou moins en saillie suivant des bandes sensiblement parallèles entre elles dans le plan de la nappe.

On a en effet pu constater qu'un réglage relatif convenable de la vitesse d'avance de la nappe et de la fréquence du mouvement alternatif des aiguilles permettait d'obtenir de telles bandes, à l'intérieur desquelles les hauteurs des fibres dressées étaient sensiblement homogènes, tandis que ces hauteurs variaient d'une bande à l'autre. Il en résulte un aspect de rayures

Pour certains réglages relatifs convenables de la vitesse d'avance de la nappe et de la fréquence du mouvement alternatif des aiguilles, lesdites bandes sont sensiblement perpendiculaires à la direction d'avance de la nappe de fibres.

Pour d'autres réglages relatifs convenables de la vitesse d'avance de la nappe et de la fréquence du mouvement alternatif des aiguilles, lesdites bandes sont inclinées par rapport à la direction d'avance de la nappe de fibres.

L'homme de métier sera capable d'effectuer les réglages permettant d'obtenir l'effet désiré, sachant qu'un certain réglage particulier ne donne un effet donné que lorsque tous les autres paramètres restent égaux, en particulier en ce qui concerne l'implantation des aiguilles.

Lesdites aiguilles, aux emplacements où elles sont présentes, peuvent être disposées aléatoirement dans un plan sensiblement perpendiculaire à leur axe, comme cela est le cas dans les aiguilleteuses connues.

Dans un mode de mise en oeuvre particulier de l'invention, lesdites aiguilles sont disposées en bandes sensiblement parallèles à la direction d'avance de la nappe de fibres.

Egalement dans un mode de mise en oeuvre particulier de l'invention, lesdites aiguilles sont réparties en au moins deux ensembles d'aiguilles, la fréquence du mouvement alternatif d'au moins un ensemble d'aiguilles étant différente de la fréquence du mouvement alternatif des autres ensembles d'aiguilles.

En outre, ladite nappe de fibres peut être animée d'un mouvement cyclique transversal sensiblement perpendiculaire à sa direction d'avance.

En outre, l'amplitude du mouvement alternatif desdites aiguilles peut être modifiée cycliquement.

En outre, au moins la vitesse d'avance de la nappe ou la fréquence du mouvement alternatif des aiguilles peut être modifié cycliquement.

Dans un mode de réalisation particulier de l'invention, on superpose des nappes de fibres de couleurs différentes.

On décrira maintenant, à titre d'exemples non limitatifs, des modes de réalisation particuliers de l'invention, en référence aux dessins schématiques annexés dans lesquels :
- la figure 1, déjà décrite, représente une aiguilleteuse de l'art antérieur ;
- la figure 2 est une vue en plan d'une moquette, illustrant le résultat de la mise en oeuvre d'un premier procédé selon l'invention ;
- la figure 3 est une vue en coupe selon la ligne III-III de la figure 2 ;
- les figures 4 à 8 sont des vues en plan de moquettes, qui illustrent les résultats de la mise en oeuvre d'autres procédés selon l'invention ; et
- la figure 9 est une vue en coupe selon la ligne IX-IX de la figure 1, d'une version de l'aiguilleteuse modifiée pour obtenir le résultat de la figure 8.

Alors que l'aiguilleteuse de la figure 1 permet avec des réglages normaux d'obtenir une moquette unie sensiblement sans défaut, un réglage relatif convenable de la vitesse d'avance de la nappe et de la fréquence du mouvement alternatif des aiguilles permet d'obtenir une moquette rayée telle que représentée aux figures 2 et 3.

Dans cette moquette, des bandes 9 où les extrémités des fibres sont peu en saillie alternent avec des bandes 10 où les extrémités des fibres sont beaucoup plus en saillie. Ces bandes sont ici sensiblement perpendiculaires à la direction d'avance de la nappe, illustrée par la flèche 11.

A titre d'exemple, une aiguilleteuse a été munie d'aiguilles ayant une certaine implantation aléatoire, avec une densité de 10 000 aiguilles au mètre, et la vitesse d'avance de la nappe de fibres a été fixée à 3,35 mètres par minute. On a alors obtenu des rayures alternées au pas a de 2,3 mm (soit la largeur de deux bandes successives) pour un réglage de la fréquence de frappe des aiguilles à 1600 mn⁻¹, correspondant à un pas de frappe de 1,9 mm (distance entre deux points de pénétration successifs d'une aiguille), compte tenu de la rétraction qui se produit lors du processus d'aiguilletage.

Un autre réglage donne des bandes inclinées par rapport à la direction d'avance comme montré à la figure 4.

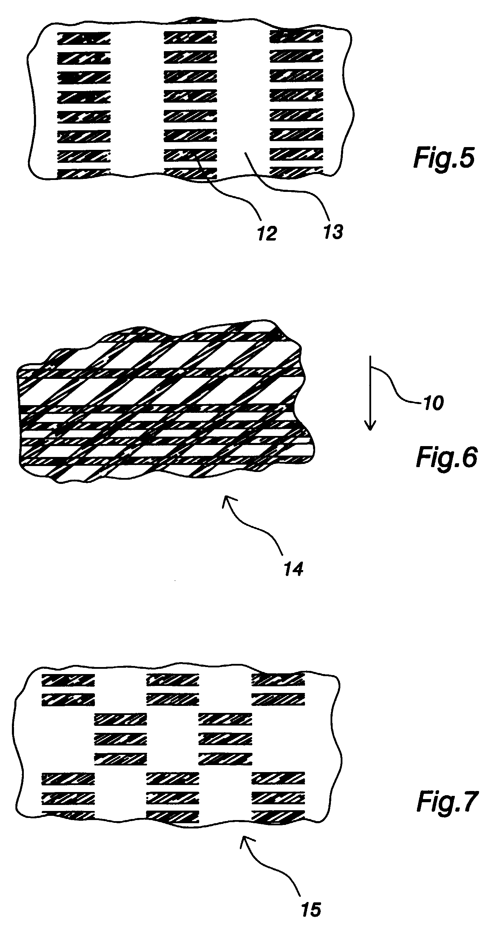

Le motif de la figure 5 est obtenu avec un réglage du type de celui de la figure 3, mais en enlevant sur les planches 5 et 6 des aiguilles par bandes parallèles à la direction d'avance de la nappe de fibres. On obtient ainsi des bandes 12 parallèles à cette direction et comprenant des rayures, alternant avec des bandes 13 sans rayures.

On observera que la cohésion de la nappe dans les bandes 13 reste néanmoins assurée. En effet, le procédé selon l'invention est généralement mis en oeuvre lors de la dernière passe d'aiguilletage, également appelée velourage. La cohésion de la nappe est assurée par les passes précédentes.

Dans tous les modes de réalisation précédents, toutes les aiguilles étaient entraînées en synchronisme.

Au contraire, dans le mode de réalisation de la figure 6, les aiguilles sont réparties en deux planches, l'une dont le mouvement est réglé comme dans le cas de la figure 3 et l'autre dont le mouvement est réglé comme dans le cas de la figure 5, c'est-à-dire à des fréquences différentes (le pas d'avance est évidemment le même pour les deux planches). On obtient alors un motif 14 combinant les motifs des figures 3 et 5.

On observera que, dans ce dernier mode de réalisation, le motif est distendu dans certaines zones dans la direction d'avance de la nappe. Ceci peut être obtenu en modifiant, notamment cycliquement, le pas d'avance de la nappe.

Le motif 15 de la figure 7 est obtenu de manière similaire à celui de la figure 5. Toutefois, dans ce cas, les aiguilles sont distribuées sur deux planches dont les bandes longitudinales sont décalées, et l'amplitude de leur mouvement alternatif est modifié cycliquement de manière que les aiguilles d'une seule planche traverse la nappe à chape frappe.

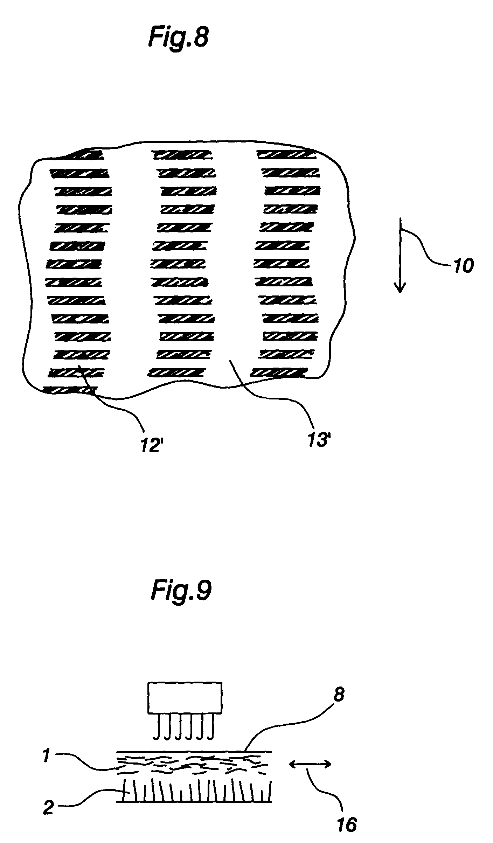

Enfin, le motif de la figure 8 est également obtenu de manière similaire à celui de la figure 5. Toutefois, dans ce cas, les bandes 11' et 12' ne sont plus rectilignes mais ondulent de part et d'autre d'une ligne moyenne parallèle à la direction d'avance de la nappe.

Ceci est obtenu comme représenté à la figure 9. La nappe 1 peut être amenée au-dessus des brosses 2 animée d'un mouvement transversal cyclique, dans la direction de la flèche 16. La nappe est ensuite redressée après aiguilletage.

En variante, la nappe pourrait être amenée normalement sur des brosses animées d'un mouvement alternatif dans la direction de la flèche 16.

On observera qu'il est possible d'utiliser non pas une nappe de fibres unique, mais deux nappes superposées de couleurs différentes. On obtient alors des effets de rayures colorées alternées.

## Revendications

1. Procédé de fabrication d'une moquette aiguilletée, comportant les étapes consistant à
former une nappe de fibres et déplacer cette nappe sensiblement parallèlement à son plan par rapport à un ensemble d'aiguilles à crans, et
animer lesdites aiguilles d'un mouvement alternatif sensiblement perpendiculairement au plan de la nappe de manière que les crans des aiguilles entremêlent les fibres de la nappe, les extrémités d'au moins certaines fibres venant en saillie sensiblement perpendiculairement audit plan,
caractérisé par le fait que la vitesse d'avance de la nappe et la fréquence du mouvement alternatif des aiguilles sont choisis en combinaison de manière que lesdites extrémités des fibres sont successivement plus ou moins en saillie suivant des bandes (9, 10) sensiblement parallèles entre elles dans le plan de la nappe.

2. Procédé de fabrication selon la revendication 1, dans lequel lesdites bandes sont sensiblement perpendiculaires à la direction d'avance de la nappe de fibres.

3. Procédé de fabrication selon la revendication 1, dans lequel lesdites bandes sont inclinées par rapport à la direction d'avance de la nappe de fibres.

4. Procédé de fabrication selon l'une quelconque des revendications 1 à 3, dans lequel lesdites aiguilles, aux emplacements où elles sont présentes, sont disposées aléatoirement dans un plan sensiblement perpendiculaire à leur axe.

5. Procédé de fabrication selon l'une quelconque des revendications 1 à 4, dans lequel lesdites aiguilles sont disposées en bandes sensiblement parallèles à la direction d'avance de la nappe de fibres.

6. Procédé de fabrication selon l'une quelconque des revendications 1 à 5, dans lequel lesdites aiguilles sont réparties en au moins deux ensembles d'aiguilles, la fréquence du mouvement alternatif d'au moins un ensemble d'aiguilles étant différente de la fréquence du mouvement alternatif des autres ensembles d'aiguilles.

7. Procédé de fabrication selon l'une quelconque des revendications 1 à 6, dans lequel ladite nappe de fibres est animée d'un mouvement cyclique transversal sensiblement perpendiculaire à sa direction d'avance.

8. Procédé de fabrication selon l'une quelconque des revendications 1 à 7, dans lequel l'amplitude du mouvement alternatif desdites aiguilles est modifiée cycliquement.

9. Procédé de fabrication selon l'une quelconque des revendications 1 à 8, dans lequel au moins la vitesse d'avance de la nappe ou la fréquence du mouvement alternatif des aiguilles est modifié cycliquement.

10. Procédé de fabrication selon l'une quelconque des revendications 1 à 9, dans lequel on superpose des nappes de fibres de couleurs différentes.
